# EUROPEAN PATENT APPLICATION

(11) **EP 4 815 366 A1**
(43) Date of publication of application: **30.09.2026**
(21) Application number: 26167536.7
(22) Date of filing: 25.03.2026
(51) Int. Cl.: H04L 9/08

(54) **TRANSFORMING CATEGORICAL FEATURES TO NUMERICAL DATA**

(30) Priority: 25.03.2025 US 202519089843
(71) Applicant: Bytedance Technology Ltd., KY1 - 1205 Grand Cayman Cayman Islands (KY)
(72) Inventor: Chen, Chuyuan, Beijing, 100028 (CN); Yin, Dong, Beijing, 100028 (CN); Wang, Li, Beijing, 100028 (CN); Yan, Qiang, Beijing, 100028 (CN)
(74) Representative: Grünecker Patent- und Rechtsanwälte PartG mbB

(57) **Abstract**

Methods, systems, and apparatus, including computer programs encoded on computer storage media, for transforming categorical features to numerical data are provided. One example method for transforming categorical features to numerical data includes: generating (402), by a first party participating in a secure multi-party computation, MPC, a first table based on a set of data having first categorical features in a first order; receiving (404), from a second party participating in the secure MPC, a second table based on a secret sharing technique, the second table comprising second categorical features in a second order; combining (406), by the first party, the first table and the second table to a combined table comprising the first categorical features and the second categorical features in a combined order; and calculating (408) numerical values for each of the first categorical features and the second categorical features by utilizing the combined table.

## Description

### FIELD

This specification relates to data processing, and in particular, to processing categorical features, for example, in a secure multi-party computation (MPC).

### BACKGROUND

The significance of artificial intelligence (Al) is continually growing, especially as a rising number of applications are developed with the aim of enhancing human work efficiency. Generally, the performance of an AI model is proportional to the quantity of data used in training. Consequently, the efficiency in managing data emerges as a critical subject of discourse in the field of AI.

In general, data used in training the model can be classified as categorical data (also called categorical features) and numerical data. Unlike numerical data, categorical data cannot be directly fed into most algorithms, necessitating a transformation process. This transformation, however, is not straightforward. Thus, handling categorical data presents unique challenges in data processing and machine learning.

### SUMMARY

This specification describes technologies for transforming categorical features to numerical data, for example, in secure MPC.

According to a first aspect, a method for transforming categorical features to numerical data is provided. The method includes: generating, by a first party participating in a secure multi-party computation (MPC), a first table based on a set of data having first categorical features in a first order, wherein the first table includes one or more columns indicating labels of the first categorical features in the first order, and one or more columns indicating counts of the first categorical features in the first order; receiving, from a second party participating in the secure MPC, a second table based on a secret sharing technique, wherein the second table includes one or more columns indicating labels of a second categorical features in a second order, and one or more columns indicating counts of the second categorical features in the second order; combining, by the first party, the first table and the second table to a combined table including the first categorical features and the second categorical features in a combined order, wherein the combined table includes one or more columns indicating labels of the first categorical features and the second categorical features in the combined order, and one or more columns indicating counts of the first categorical features and the second categorical features in the combined order; and calculating numerical values for each of the first categorical features and the second categorical features by utilizing the combined table.

With reference to the first aspect, in some implementations, generating the first table based on the set of data having first categorical features in the first order includes: generating a first random seed and a second random seed; and encrypting data of the one or more columns indicating the labels of the first categorical features using the first random seed, and encrypting data of the one or more columns indicating the counts of the first categorical features using the second random seed.

With reference to the first aspect, in some implementations, a value of the first random seed is different from a value of the second random seed.

With reference to the first aspect, in some implementations, generating the first table based on the set of data having first categorical features in the first order includes: determining a quantity of columns indicating the labels of the first categorical features and a quantity of columns indicating the counts of the first categorical features based on number of different categories included in the first categorical features, wherein each column of the one or more columns indicating the labels of the first categorical features corresponds to one of the different categories of the first categorical features, and each column of the one or more columns indicating the counts of the first categorical features corresponds to one of the different categories of the first categorical features.

With reference to the first aspect, in some implementations, the set of data having first categorical features in the first order includes feature data indicating the first categorical features, and label data indicating labels corresponding to the first categorical features. In these implementations, generating the first table based on the set of data having first categorical features in the first order includes: determining values of data in the one or more columns indicating the labels of the first categorical features in the first order based on the label data; and determining values of data in the one or more columns indicating the counts of the first categorical features in the first order based on the feature data.

With reference to the first aspect, in some implementations, calculating numerical values for each of the first categorical features and the second categorical features by utilizing the combined table includes: according to the combined order of the first categorical features and the second categorical features, performing summation operations along rows of the combined table to calculate the numerical values for each of the first categorical features and the second categorical features.

With reference to the first aspect, in some implementations, performing summation operations along rows of the combined table to calculate the numerical values for each of the first categorical features and the second categorical features includes, for a current row in the combined table: determining a current category corresponding to the current row; calculating a first summation and a second summation based on all previous rows of the current row, wherein the first summation indicates a quantity of categories that are same as the current category and have a positive value of label in the all previous rows of the current row, the second summation indicates a quantity of categories that are same as the current category in the all previous rows of the current row; and calculating numerical value corresponding to the current category based on the first summation and the second summation.

With reference to the first aspect, in some implementations, the method according to the first aspect further includes: shuffling, by the first party, raw data having the first categorical features in a first original order to the set of data having the first categorical features in the first order.

With reference to the first aspect, in some implementations, the method according to the first aspect further includes: identifying a third random seed. In these implementations, combining the first table and the second table to a combined table including the first categorical features and the second categorical features in a combined order includes: combining the first categorical features and the second categorical features in the combined order according to the third random seed.

With reference to the first aspect, in some implementations, the method according to the first aspect further includes: sending, by the first party, the first table to the second party based on a secret sharing technique.

According to a second aspect, one or more computer-readable storage media is provided. The one or more computer-readable storage media stores one or more instructions that, when executable by one or more computers, cause the one or more computers to perform the method according to the first aspect or one or more implementations of the first aspect.

According to a third aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to the first aspect or one or more implementations of the first aspect.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of an example multi-party computation (MPC) system.
FIG. 2 illustrates an example dataset.
FIG. 3 is a schematic diagram of a workflow of an example process for transforming categorical features to numerical data.
FIG. 4 is a flow diagram of an example process for transforming categorical features to numerical data.
FIGS. 5A to 5H illustrate example tables used in an example process for transforming categorical features to numerical data.
FIG. 6 is an example computing system.

Like reference numbers and designations in the various drawings indicate like elements.

### DETAILED DESCRIPTION OF EMBODIMENTS

Categorical features are variables in a dataset that represent categories or groups, such as color, gender, geographic location, product categories. Since categorical features can represent key attributes that are helpful for capturing the underlying patterns and relationships in the data and provide valuable information for predictive modeling, categorical features play a crucial role in the field of machine learning, such as classification models and other machine learning applications. However, unlike numerical data, categorical features cannot be directly processed by most algorithms of machine learning. In general, a transformation process is needed to encode categorical features to numerical data. Properly encoded categorical features can significantly enhance model performance by providing critical context and improving the model's ability to generalize from the training data to unseen instances. For example, in classification tasks, the encoded categorical features can be particularly influential in determining the decision boundaries and improving the accuracy of the predictions.

Example techniques for transforming categorical features to numerical data include: one-hot encoding, label encoding, and target encoding. One-hot encoding is a technique that converts categorical features into a binary matrix, where each category is represented by a binary vector. However, when the categorical features are high cardinality features (e.g., features with many categories, such as user ID), such technique may generate a large number of new features, and lead to a significant increase in dimensionality, causing a curse of dimensionality. The increased dimensionality may make data sparse, which will reduce modeling performance, and thus more data is needed for modeling, resulting in increased computational complexity. In addition, during the one-hot encoding process, information of original categorical features, such as sequence and frequency, will be discarded, though some of the information is important to modeling.

Label encoding is a technique that assigns a unique integer to each category in the categorical features. One disadvantage of label encoding is that it may inadvertently introduce ordinal relationships among categories, potentially biasing modeling.

Target encoding, also known as meaning encoding, is a technique that replaces, based on the relationship between the categories, the original categorical features with statistical values (e.g., mean value) of the target variable for that category. Though targeting encoding allows useful information about original categorical features to be retained, while keeping the dimensionality unchanged without introducing ordinal relationships, on the other hand, when the mean value of the labels is forcibly used to represent the categorical features, condition shift problems will occur when the data structure and distribution of the training dataset and test dataset are different. Therefore, targeting encoding may cause a prediction shift and undesirable data leakage. Especially with the emergence of isolated data islands, each party holds its own data and is reluctant to share it externally. Thus, it is crucial to accurately, efficiently, and securely process categorical features used belong to different parties (e.g., organizations, companies, etc.,) in the secure MPC without data leakage becomes crucial.

Techniques described in this disclosure can help provide effective and efficient techniques for transforming categorical features to numerical data, especially in applications with data privacy and security requirements such as secure multi-party computation (MPC). In some implementations, the describe techniques can process categorical features in secure MPC that can ensure data privacy and security, for example, by generating tables (or other data structures) to represent the categorical features, manipulating the categorical features, and calculating numerical values to represent the categorical features based on the tables.

As an example method for transforming categorical features to numerical data, in some implementations, categorical features can be received or otherwise identified by a first party participating in the secure MPC. The first party can generate a first table based on a set of data having first categorical features in a first order. The first table includes one or more columns indicating labels of the first categorical features in the first order, and one or more columns indicating counts of the first categorical features in the first order. The first party can receive, from a second party participating in the secure MPC based on a secret sharing technique, a second table. The second table includes one or more columns indicating labels of the second categorical features in a second order, and one or more columns indicating counts of the second categorical features in the second order. In some implementations, the first party can combine the first table and the second table to a combined table. The combined table includes the first categorical features and the second categorical features in a combined order. The combined table also includes one or more columns indicating labels of the first categorical features and the second categorical features in the combined order, and one or more columns indicating counts of the first categorical features and the second categorical features in the combined order. In some implementations, the first party calculate numerical values for each of the first categorical features and the second categorical features by utilizing the combined table.

The described techniques can achieve one or more technical benefits/advantages. In some implementations, the described techniques can improve computational efficiency and reduce or minimize the training time while maintaining accuracy. For example, by utilizing a combined table generated based on a self-generated table including first categorical features and a received table including second categorical features, and calculating numerical values for each of the categorical features using the combined table, the described techniques may facilitate the calculation of numerical values for categorical features and yield correct results. Moreover, the accuracy of numerical data used to replace categorical features can improve model performance in subsequent training phases, ultimately leading robust predictive models, and thereby benefits training model and predictive modeling in the field of machine learning. In some implementations, the described techniques can be integrated with secure MPC to help ensure no private information in the dataset is leaked. For example, by generating and sharing a table including categorical features based on the secret sharing technique, the sensitive information of the data owned by each party can be kept secret without influencing the accuracy of the computation. Thus, the described techniques allow data from disparate sources to be aggregated and processed without compromising privacy. In some implementations, different or additional advantages can be achieved.

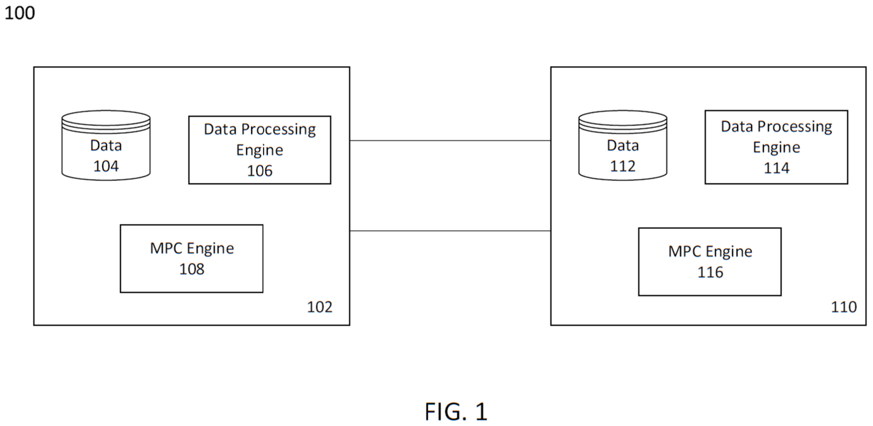

FIG. 1 is a diagram of an example secure multi-party computation (MPC) system 100. Secure MPC is a technique developed for data collaborations, while maintaining data privacy and security. In general, secure MPC allows parties to jointly evaluate or analyze their respective private data, or jointly train a prediction model using their respective private data, without sharing the private data with others. In some implementations, the secure MPC allows parties to jointly compute a function over their private input without revealing the private input to the other parties. While in secure MPC, any suitable number of parties can cooperate, for simplicity, the secure MPC system 100 is illustrated with two parties: a first party 102 and a second party 110, as shown in FIG. 1. The parties here can represent, for example, entities that seek to collaborate on data processing or data training without revealing the private data of either party.

Referring to FIG. 1, the first party 102 includes a data store 104, a data processing engine 106, and an MPC engine 108. Similarly, the second party 110 includes a data store 112, a data processing engine 114, and an MPC engine 116. Each party can use their respective data processing engines to perform one or more functions on data from the data store. For example, the data processing engine 106 can perform one or more functions on a dataset from the data store 104. The result of the function can be in the form of secret sharing shared with the second party 110. Typically, secret sharing is used to evaluate the computation such that each party obtains a share of the output, which reveals the plaintext output when combined.

Further, each party can use their respective MPC engines to jointly perform operations (e.g., addition, subtraction, multiplication, comparison, equality testing) under cryptographic protocols shared by the parties. In some implementations, the cryptographic protocols involve message exchanges, oblivious transfers, or pre-generated correlation. The MPC engine 108 can perform operations based on secret shares of data, instead of raw inputs (e.g., plaintext) of the data, so that the parties can jointly perform an operation without revealing their private inputs.

Since each party only knows their own input and the result of the function jointly computed by the parties, the first party 102 cannot learn the input of the second party 110. Therefore, parties in the secure MPC can collaborate and leverage collective data insights while maintaining privacy and security of data.

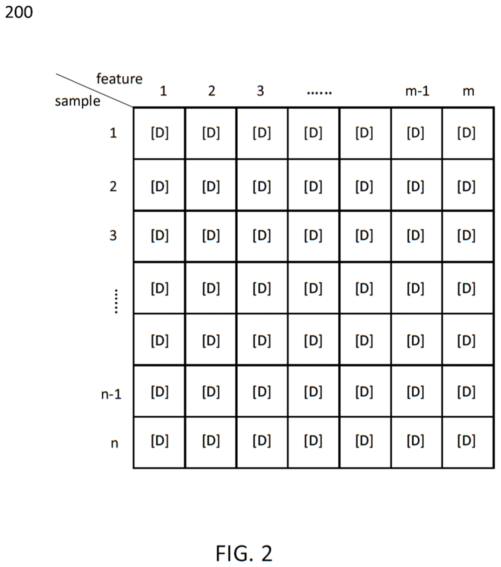

FIG. 2 illustrates an example dataset 200. Referring to FIG. 2, the example dataset 200 includes *n* samples (represented by rows), where each sample includes data associated with m features (represented by columns), where *n* and *m* are positive integers.

In some implementations, the dataset 200 can be a joint dataset that includes data collected from multiple parties. For example, in a multi-party setting (e.g., a two-party setting), a part of the samples (e.g., *n*₁ samples, where *n*₁ < *n*) are private data owned by a first party (e.g., the first party 102 of FIG. 1), while a part of the samples (e.g., *n*₂ samples, where *n*₂ *< n*) are private data owned by a second party (e.g., the second party 110 of FIG. 1). For another example, in a multi-party setting, a part of the features (e.g., *m*₁ features, where *m*₁ < *m*) are private data owned by a first party, while a part of the features (e.g., *m*₂ features, where *m*₂ < *m*) are private data owned by a second party.

To ensure the private data is not revealed to any other party, in some implementations, the dataset 200 may include data in the form of secret sharing, where each party has a secret share of each data piece (e.g., denoted as [D] in FIG. 2) in the dataset 200, instead of having the plaintext of each data piece (e.g., denoted as D). By making all interactive data between the parties in the form of secret sharing, and ensuring that there is no reveal operation, the security risk becomes relatively low.

In some implementations, a joint dataset can be split between the parties by partitioning, secret sharing, or a combination of both. For example, consider a threat model with semi-honest adversaries, such as, a first party *P₁* and a second party *P₂,* participating in the secure MPC. The data space (e.g., number of features) of a joint dataset *D* is 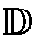 , where the dimension of the data space (denoted as | 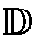 |) is *m.* In some implementations, the joint dataset *D* is split between the first party *P₁* and the second party *P₂* by partitioning. For example, the joint dataset *D* is partitioned into such as three disjoint datasets, *D₁, D₂,* and *D*_{*}, where the dimension of the joint dataset |*D*| is *n,* the dimension of the disjoint dataset |*D₁*| is *n₁,* the dimension of the disjoint dataset |*D*₂| is *n₂,* and the dimension of the disjoint dataset |*D*_{*}| is *n_{*}.* In some implementations, the disjoint dataset *D*_{*} is further spilt into two secret shares, [*D*_{*}]₁ and [*D*_{*}]₂*.* That is, *D*_{*}[*i*] = [*D_{*}*]₁[*i*] ⊕ [*D*_{*}]₂[*i*], where Vi=1, 2, *..., n_{*}.* In some implementations, inputs of the first party *P₁* includes *D₁* and [*D*_{*}]₁, and inputs of the second party *P₂* includes *D₂* and [*D*_{*}]₂*.* In such implementations, as an output, numerical data for the joint dataset *D* can be well processed in secret sharing format. In this case, the first party *P₁* don't learn the disjoint datasets *D₂* or *D*_{*}, and the second party *P₂* don't learn the disjoint datasets *D₁* or *D*_{*}. Meanwhile, neither the first party *P₁* nor the second party *P₂* learns the labels in the datasets, and thereby the security of the dataset can be guaranteed. However, public information, such as the length of the joint dataset *D* (denoted as *k*)*,* the dimension of datasets (e.g., dimension of the joint dataset *D,* or dimension of the disjoint datasets *D₁, D₂,* and *D_{*}*) are not protected and can be learned by the parties.

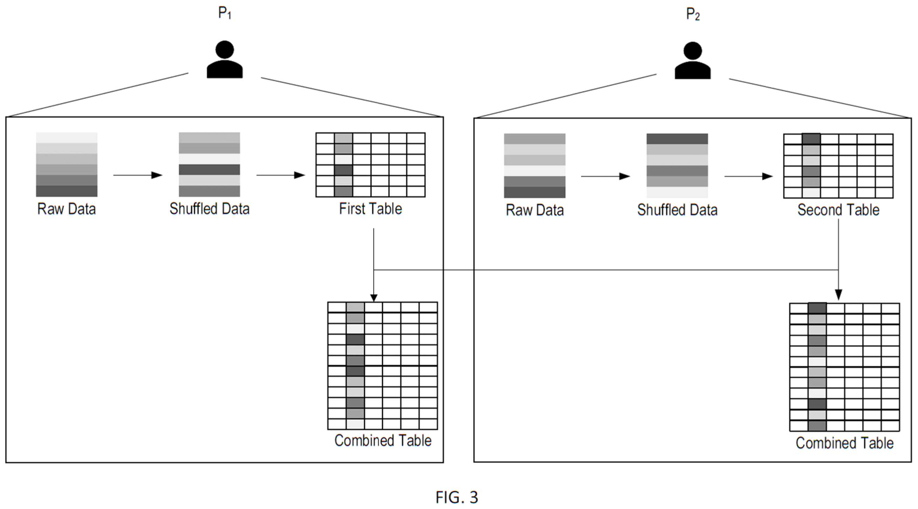

FIG. 3 is a schematic diagram of an example workflow for transforming categorical features to numerical data with two parties participating in secure MPC. Referring to FIG. 3, two parties, a first party *P₁* and a second party *P₂,* participate in the secure MPC. In some implementations, the first party *P₁* has a configuration similar to the first party 102 of FIG. 1, and the second party *P₂* has a configuration similar to the second party 110 of FIG. 1. That is, both the first party *P₁* and the second party *P₂* include a respective data store, a data processing engine, and an MPC engine. In some implementations, the secure MPC can include more than two parties and the example workflow can be adapted for each of the more than two parties participating in the secure MPC.

Referring to FIG. 3, each of party can perform transforming categorical features to numerical data by, for example, receiving or identifying raw data; shuffling the raw data to shuffled data; generating a table based on the shuffled data; combining the table with a table from other party to a combined table; and calculating numerical values for categorical features based on the combined table. Take the first party *P₁* as an example, the first party *P₁* may identify raw data in the data store, or receive raw data from a database or another source. The first party *P₁* may shuffle, by the data processing engine, the raw data to shuffled data, and generate a first table based on the shuffled data. The first party *P₁* may then receive a second table from the second party *P₂* and combine, by using the MPC engine, the first table with the second table to a combined table. The first party *P₁* may also calculate, by using the MPC engine, numerical values for categorical features based on the combined table.

In some implementations, the first party *P₁* receives the second table from the second party *P₂* based on the secret sharing technique, and combines, using the MPC engine, the received second table and the generated first table to a combined table. Therefore, by generating and sharing the categorical features in a format of the expanded table based on the secret sharing technique, the techniques provided in the present disclosure can enable isolated data islands (i.e., parties participating in the secure MPC) to handle their categorical features security, ensuring that sensitive information of each party is protected throughout the secure MPC process. Further, by leveraging secure MPC techniques, data from disparate parties can be aggregated and processed without compromising privacy.

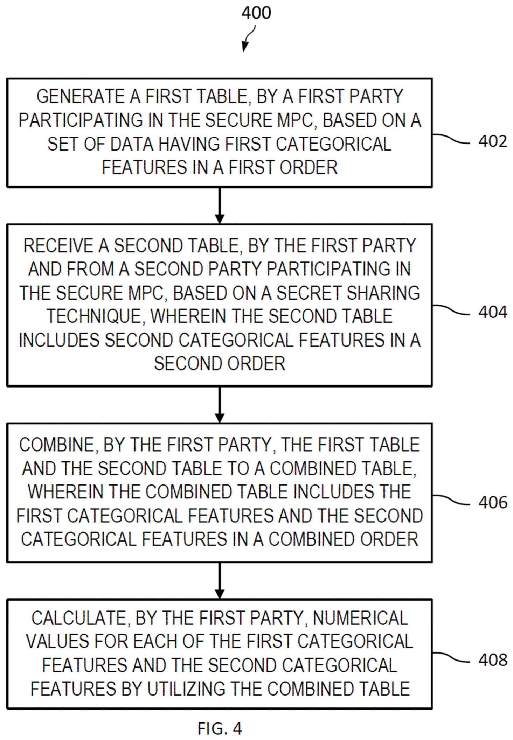

In some implementations, each of the parties can perform transforming categorical features to numerical data according to an example process 400 described in detail with respect to FIG. 4. FIG. 4 is a flow diagram of an example process 400 for transforming categorical features to numerical data.

In some implementations, the example process 400 can be implemented by a party participating in the secure MPC (e.g., the first party 102 or the second party 110 shown in FIG. 1 or the first party *P₁* or the second party *P₂* in FIG. 3) to calculate numerical values for categorical features. The operations shown in process 300 may not be exhaustive and that other operations can be performed as well before, after, or in between any of the illustrated operations. Further, some of the operations may be omitted, or performed simultaneously or in a different order than shown in FIG. 4.

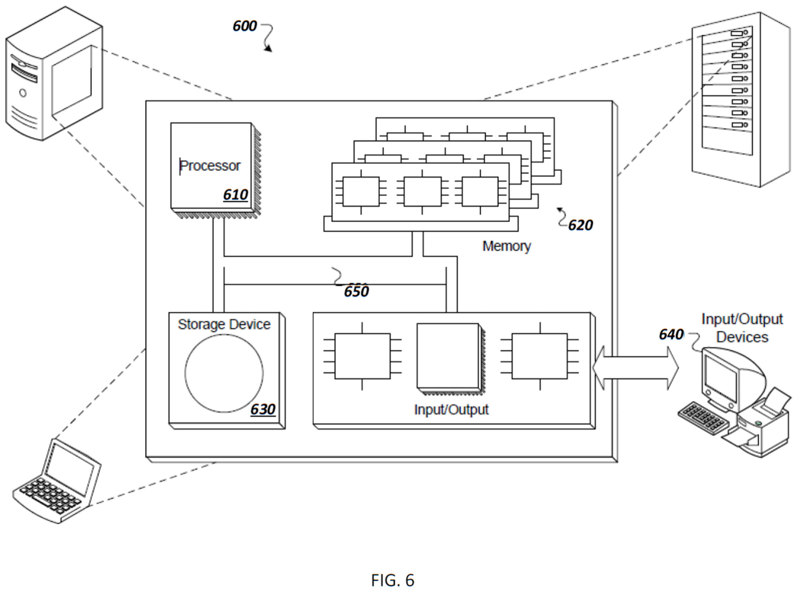

For convenience, the process 400 will be described as being performed by a system of one or more computers (e.g., a server of a party participating in the secure MPC implemented by a computer system 600 of FIG. 6), located in one or more locations, and programmed appropriately in accordance with this specification. For example, a party participating in the secure MPC (e.g., the first party 102 or the second party 110 shown in FIG. 1 or the first party *P₁* or the second party *P₂* in FIG. 3), when appropriately programmed, can perform the process 300.

According to implementations of the present disclosure, for example, assuming two parties, a first party *P₁* (e.g., the first party 102 of FIG. 1 or the first party *P₁* in FIG. 3) and a second party *P₂* (e.g., the second party 110 of FIG. 1 or the second party *P₂* in FIG. 3), participate in the secure MPC. In some implementations, the MPC can include more than two parties, and the example process 400 can be adapted for each of the more than two parties participating in the secure MPC.

At 402, a first table is generated, by the first party participating in the secure MPC, based on a set of data having first categorical features in a first order. Throughout the description, the term "table" is used as an example data structure to represent and/or store the data, and in some instances, the term "table" can encompass another format or data structure (e.g., a matrix, an array, a list, a queue, a tree, etc.) suitable for representing and/or storing data in a computer system.

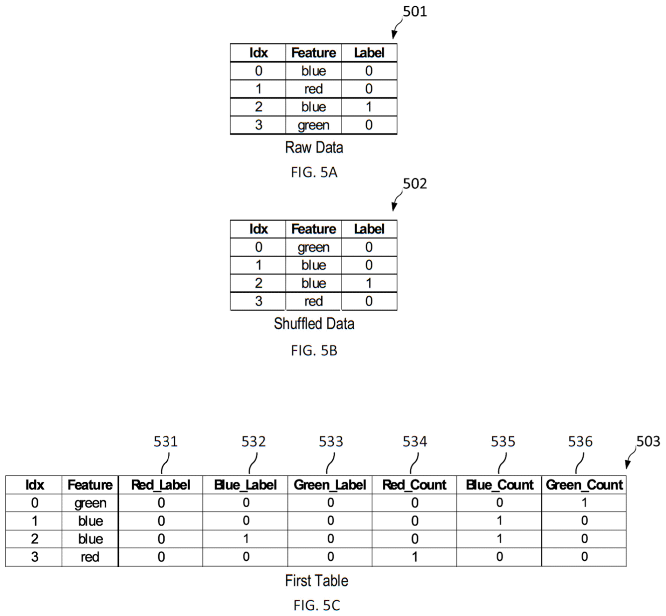

In some implementations, the first party *P₁* may receive, collect, or otherwise identify raw data *D₁.* For example, the first party *P₁* may store raw data *D₁* in its data store. FIG. 5A shows an example table 501 (also referred to as a raw data table) that includes a set of raw data having first categorical features. The raw data table 501 includes a set of data having first categorical features in a first original order. In some implementations, the first party *P₁* receives and stores raw data having a first categorical features in a first original order in the data store. As shown in FIG. 5A, the raw data table 501 includes a column of colors as categorical features, wherein the colors are shown in an original order of: "blue", "red", "blue", "green". In some implementations, the raw data table 501 also includes a column of labels corresponding to colors. In some implementations, the labels can be numeric values (e.g., binary values "0" and "1" or "-1" and "1" or other values) that indicate whether a certain categorical feature is true (or positive) or false (or negative). For example, as shown in FIG. 5A, the label corresponds to the afore-mentioned "blue", "red", "blue", "green" are "0", "0", "1", "0", which indicate that underlying four categorical features are not "blue", not "red", "blue", not "green," respectively.

In some implementations, considering data privacy, the raw data may be shuffled, so as to avoid revealing sensitive information involved in the raw data. For example, the first party *P₁* may shuffle, in the data processing engine, the raw data *D₁* to a set of data (or called shuffled data, and noted as *"D'₁"*) having the first categorical features in a first shuffled order. FIG. 5B shows an example table 502 (also referred to as a shuffled data table) that includes a set of data obtained by shuffling the set of data included in the raw data table 501. The shuffled data table 502 can include a set of data having the first categorical features (i.e., the colors) in a first shuffled order. It can be seen that, the first shuffled order is different from the first original order, which makes it difficult to reveal the raw data *D₁*.

Referring to FIG. 5B, in comparison with the raw data of FIG. 5A, the shuffled data has the colors (and their corresponding labels) in a different order. In this example, the color "blue" and its corresponding label "0" in the first row of the raw data are shuffled to the second row of the shuffled data. The color "red" and its corresponding label "0" in the second row of the raw data are shuffled to the fourth row of the shuffled data. The color "blue" and its corresponding label "1" in the third row of the raw data are shuffled to the third row of the shuffled data. The color "green" and its corresponding label "0" in the fourth row of the raw data are shuffled to the first row of the shuffled data.

In some implementations, the first table may be generated based on a manner of one-hot mapping based on the data (e.g., raw data or the shuffled data) having first categorical features in a first order (e.g., the first original order as in the raw data or the first shuffled order in the shuffled data). For example, the first party *P₁* may generate, in the data processing engine, a first table based on the shuffled data having the first categorical features in the first shuffled order. FIG. 5C shows a table 503 as an example of the first table, which is generated based on the set of data *D*'*₁* included in the shuffled data table 502. In some implementations, the generated first table may include more columns than raw data (e.g., the raw data table 501) or shuffled data (e.g., the shuffled data table 502). For example, referring to FIG. 5C, the example first table 503 may include one or more columns (such as columns 531, 532, 533) that indicate labels of the first categorical features in the first shuffled order, and one or more columns (such as columns 534, 535, 536) that indicate counts of the first categorical features in the first shuffled order.

In some implementations, the quantity of columns included in the first table may be determined based on the number of different categories included in the first categorical features. For example, a quantity of columns indicating the labels of the first categorical features and a quantity of columns indicating the counts of the first categorical features may be, respectively, determined based on the number of different categories included in the first categorical features. In some implementations, the quantity of columns indicating the labels of the first categorical features equals the number of different categories included in the first categorical features, and the quantity of columns indicating the counts of the first categorical features also equals the number of different categories. With reference to FIGS. 5B to 5C, in this example, since the first categorical features of the shuffled data table 502 include three different categories, the generated first table 503 includes three columns (i.e., columns 531, 532, 533) indicating the labels of the first categorical features and three columns (i.e., columns 534, 535, 536) indicating the counts of the first categorical features.

In some implementations, each column in the first table may further correspond to a category among the different categories of the first categorical features. In particular, in the first table, each column of the one or more columns indicating the labels of the first categorical features correspond to one of the different categories of the first categorical features. Similarly, each column of the one or more columns indicating the counts of the first categorical features corresponds to one of the different categories of the first categorical features. Take the first categorical features that include three different categories (such as category *C_{A},* category *C_{B},* and category C*_{c}*) as an example, the three columns indicating the labels of the first categorical features may correspond to the category *C_{A},* the category *C_{B},* and the category *C_{c}*, respectively. That is, the three columns indicating the labels of the first categorical features include: one column indicating the label of the first categorical features classified in category *C_{A},* one column indicating the label of the first categorical features classified in category *C_{B},* and one column indicating the label of the first categorical features classified in category *C_{c}*. Likewise, the three columns indicating the counts of the first categorical features may include: one column indicating the count of the first categorical features classified in category *C*₄, one column indicating the count of the first categorical features classified in category *C_{B},* and one column indicating the count of the first categorical features classified in category *C_{c}*.

As shown in the example in FIG. 5C, the three columns that indicate labels of first categorical features (e.g., the colors) include: a column 531 (Red_Label) indicating the label of the colors classified in "red"; a column 532 (Blue_Label) indicating the label of the colors classified in "blue"; and a column 533 (Green_Label) indicating the label of the colors classified in "green". The three columns that indicate counts of the colors include: a column 534 (Red_Count) indicating the count of the colors classified in "red"; a column 535 (Blue_Count) indicating the count of the colors classified in "blue"; and a column 536 (Green_Count) indicating the count of the colors classified in "green".

In some implementations, values of data in the first table are determined based on data in the set of data *D'₁.* Generally, the set of data *D'₁* may include at least feature data indicating the first categorical features, and label data indicating labels (e.g., binary values 1 and 0 indicating whether the category is true/positive or false/negative) corresponding to the first categorical features. In some implementations, when generating the first table, the values of data in the columns indicating the labels of the first categorical features are determined based on the label data of the set of data *D'₁,* and the values of data in the columns indicating the counts of the first categorical features are determined based on the feature data of the set of data *D'₁.* Each row of the first table includes data corresponding to one categorical feature, and the label data and count data corresponding to the one categorical feature. For example, in the set of data *D'₁,* if feature data with an index 0 is classified in category *C_{B},* and the corresponding label data is 1, in the first row of the first table (i.e., the row with an index 0), the column indicating the label being classified in category *C_{B}* is 1, while the columns indicating the label being classified in other categories (e.g., *C_{c}* or *C_{A}*) are 0. If the feature data with an index 0 is classified in category *C_{B},* and the corresponding label data in the set of data *D'₁* is 0, then in the row with the index 0, the column indicating the labels of the first categorical features being classified in category *C_{B}* is 0, while the rest of the columns indicating the label being classified in other categories (e.g., *C_{c}* or *C_{A}*) are also 0. Moreover, since in the first row of the first table, the feature data is classified in category *C_{B},* the column indicating the counts of the first categorical features being classified in category *C_{B}* is 1, while the rest of the columns indicating the counts of the first categorical features being classified in other categories are 0 in the first row of the first table.

As a specific example in FIGS. 5B to 5C, since only the "blue" in the third row of the shuffled data table 502 shown in FIG. 5B has the label "1", in the first table 503 shown in FIG. 5C, only the "blue" in the third row has the label "1" at the position corresponding to the Blue_Label column 532, while the rest positions are filled with label "0".

As an example shown in FIG. 5C, for the first row of the first table 503, the color is "green", then "1" is filled at the position corresponding to the Green_ Count column 536 in the first row, and "0" are filled at the rest positions (i.e., the position corresponding to the Red_Count column 534 and the Blue_ Count column 535 in the first row). For another example, for the second row of the first table 503, the color is "blue", then "1" is filled at the position corresponding to the Blue_Count column 535 in the second row, and "0" are filled at the rest positions (i.e., the position corresponding to the Red_Count column 534 and the Green_Count column 536 in the second row).

For the purpose of ensuring the data not to be revealed to any other party, in some implementations, the first party *P₁* may generate one or more random seeds to encrypt data in the first table. For example, the first party *P₁* may generate a first random seed *R₁* and/or a second random seed *R₂,* where the first random seed *R₁* is used to encrypt data in the one or more columns indicating the labels of the first categorical features, and the second random seed *R₂* is used to encrypt data in the one or more columns indicating the counts of the first categorical features. It should be noted that, the random seed can be generated using any suitable method known in the art. The present disclosure does not make any limitation on this. In some implementations, the value of the random seed can be chosen or otherwise generate to be relatively close to the value of data to be encrypted. For example, if the data to be encrypted is 1, 0.4318 (or another value within a range of 1) may be a preferred value of the random seed than a value far away from or outside the range of 1, say, 2000. In some implementations, the values of data to be encrypted by the first random seed *R₁* and the second random seed *R₂* can be the same, the value of the first random seed *R₁* and the second random seed *R₂* may be different. In this case, it is more difficult to decrypt the encrypted data, which increases data security in the subsequent secure MPC process.

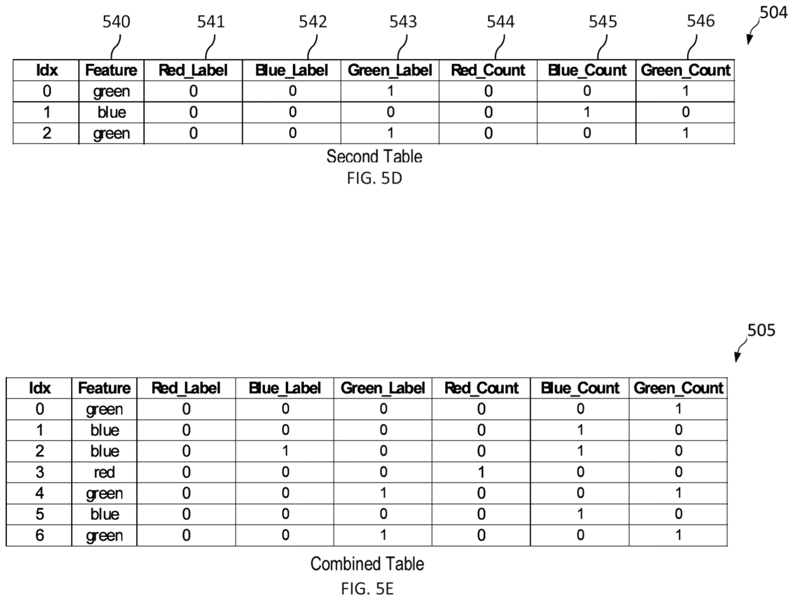

At 404, a second table is received, by the first party and from the second party participating in the secure MPC, based on a secret sharing technique. In some implementations, the second table may include a set of data *having* second categorical features in a second order. The second order can refers to, for example, a second original order as in raw data received, collected, or otherwise identified by the second party, or a second shuffled order in a shuffled data obtained by the second party shuffling the raw data). FIG. 5D shows an example table 504 (also referred to as a second table) that includes a set of data having a second categorical features in the second shuffled order.

Referring to FIG. 5D, the second table 504 includes a column 540 of colors, wherein the colors are shown in an order of: "green", "blue", "green". The second table 504 also includes three columns (541, 542, 543) *indicating* the labels of the colors (i.e., a Red_Label column 541, a Blue_Label column 542, and a Green_Label column 543), and three columns (544, 545, 546) indicating the counts of the colors (i.e., a Red_Count column 544, a Blue_Count column 545, and a Green_Count column 546).

In some implementations, the second table is generated by the second party, for example, using a similar step as *mentioned* in 402. For example, the second party *P₂* generates, in the data processing engine, a second table based on the shuffled data having the second categorical features in the second order. For details, please refer to the description of 402 above, which is not repeated here.

By using the secret sharing technique, parties participating in the secure MPC are allowed to compute *without* revealing underlying values (e.g., information about the original data on their own). In some implementations, by receiving, by the first party *P₁,* the second table in the form of secret sharing, and ensuring that there is no reveal operation, the security risk of the secure MPC can be reduced.

At 406, the first table and the second table are combined, by the first party, to a combined table. In some implementations, the combined table includes the first categorical features and the second categorical features in a combined order. In some implementations, the combined table includes *one* or more columns indicating labels of the first categorical features and the second categorical features in the combined order, and one or more columns indicating counts of the first categorical features and the second categorical features in the combined order. FIG. 5E shows an example table 505 of the combined table generated by combining (e.g., concatenating) the first table 503 of FIG. 5C and the second table 504 of FIG. 5D. Referring to FIG. 5E, the combined table 505 includes the colors shown in the first table 503 as the first four rows and the colors shown in the second table 504 in the last three rows, without changing the orders of the colors.

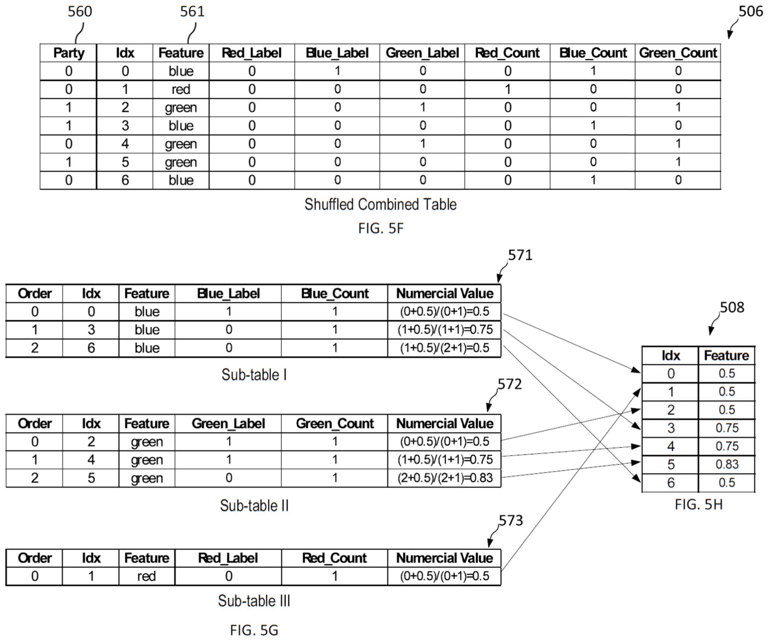

In some *implementations,* to lower security risk of the secure MPC, a random seed may be used to determine the insertion order of the first table and the second table. In this case, the first categorical features in the first table and the second categorical features in the second table can be inserted into the combined table without following the first order and the second order. For example, the first party *P₁* may identify a third random seed *R₃,* and shuffle the combined table using the third random seed *R₃* to obtain a shuffled combined table. In the shuffled combined table, the first categorical features and the second categorical features are in a random order without revealing the first order of the first categorical features in the first table or the second order of second categorical features in the second table. FIG. 5F shows an example table 506 obtained by shuffling the combined table 505 using the third random seed *R₃.* In some implementations, the shuffled combined table can be obtained in another manner without first forming the combined table. Referring to FIG. 5F, the table 506 includes the colors shown in the first table 503 and the colors shown in the second table 504 arranged in an order determined by the random seed identified by the first party *P₁*. As shown in FIG. 5F, the table 506 may include a column 560 (i.e., "Party") to show the corresponding party of each color. For example, "0" represents the first party *P₁,* and "1" represents the second party *P₂.* With reference to the table 506 of FIG. 5F, the data in the first row, the second row, the fifth row, and the seventh row is from the first table 503, and the data in the third row, the fourth row, and the sixth row is from the second table 504.

At 408, by utilizing the combined table, numerical values for each of the first categorical features and the second categorical features in the combined table are calculated by the first party. In some implementations, the numerical values for each of the first categorical features and the second categorical features may be computed in rows one by one from top to bottom, for example, in a manner of private information retrieval. Private information retrieval is a technique that allows a user to retrieve an element (for example, data) from a database without revealing which element is retrieved. In some implementations, by using the private information retrieval, the numerical values can be calculated without revealing information corresponding to the categorical features. In some implementations, the numerical values for each of the first categorical features and the second categorical features are further calculated by performing summation operations along rows of the combined table according to the combined order of the first categorical features and the second categorical features with or without shuffling.

In some implementations, the numerical values for categorical features may be calculated based on a principle of targeting encoding, such as a method called Ordered Target Encoding (TE). The Ordered TE method provides an algorithm (as shown in equation (1)) to handle the categorical features. The equation (1) shows dealing with a categorical feature i by substituting the category ${x}_{k}^{i}$ of k-th training example with one numeric feature equal to some target statistic (TS) ${\hat{x}}_{k}^{i}$, where the expected target y conditioned by the category may be estimated as: ${\hat{x}}_{k}^{i} \approx E \left(\left.y\right|{x}^{i}={x}_{k}^{i}\right)$.${\hat{x}}_{k}^{i} = \frac{{\sum }_{{x}_{j} ∈ {D}_{k}} 1 \left\{{x}_{j}^{i}={x}_{k}^{i}\right\} ⋅ {y}_{j} + ap}{{\sum }_{{x}_{j} ∈ {D}_{k}} 1 \left\{{x}_{j}^{i}={x}_{k}^{i}\right\} + a}$ wherein, *Dₖ* contains instance from *x₁* to *x*_{*(k-1*)} in a dataset; *a* is a parameter with a constant value (e.g., 1); *p* is the prior value and can be configured with a default value (e.g., 0.5 or 1, or another suitable value.) In view of the above targeting encoding, in some implementations, the numerical values for categorical features in the combined table are calculated by using a method including two-party secure addition, multiplication, and division. For example, for a current row in the combined table, a current category corresponding to the current row can be determined, and then, on the basis of the determined current category, a first summation and a second summation are calculated based on all previous rows of the current row.

In some implementations, the first summation is determined based on categories that are same as the determined current category and have a positive value of label (e.g., "1" in FIG. 5E or 5F, or another value indicating that a category feature is positive or true) in all the previous rows of the current row. For example, the first summation equals to the quantity of categories that are same as the determined current category and have a positive value of label in all the previous rows of the current row. For example, it may use private information retrieval to find the first summation (denoted as *Enc*[*label_positive*_*sum*]) by performing summation on the same category with a positive label value, that is: *Enc*[*label*_*positive*_*sum*] *= sum*(*Enc[cate_count_label*(*0*)*],...., Enc[cate_count_label*(*i -1)]).*

In some implementations, the second summation is determined based on categories that are same as the determined current category in all the previous rows of the current row. For example, the second summation equals to the quantity of categories that are same as the determined current category in all the previous rows of the current row. For example, it may use private information retrieval to find the second summation (noted as *Enc[cate_cout*]) by performing summation on the same category, that is: *Enc[cate _cout*] = *sum(Enc[cate _counts*(*0*)*],...., Enc[cate_counts(i -1)]).*

In some implementations, the numerical value corresponding to the determined current category can then be calculated based on the first summation (*Enc*[*label_positive_sum*]) and the second summation *(Enc[cate_cout]).* For example, the numerical value (noted as *Enc*[*encoding_res*]) corresponding to the determined current category can be calculated based on the following equation (2):
$Enc \left[encoding_res\right] = \frac{Enc \left[label_positive_sum\right] + ap}{Enc \left[cate_cout\right] + a}$ wherein, in some implementations, *a* is a parameter with a value of 1, and *p* is a parameter with a value of 0.5. In some implementations, parameter *a* and parameter *p* can be given other suitable values, which is not limited by the present disclosure. Thereby, the categorical features are then transformed to numerical data with the above equation (2).

FIG. 5G shows the intermediate tables (e.g., sub-table I 571, sub-table II 572, sub-table III 573) used in the calculation process for calculating numerical values for each of the colors in the table 505 of FIG. 5F. These intermediate tables collect the same category features (e.g., color in FIG. 5G) together. For example, the rows of data in the table 505 may be grouped according to the color. Referring to FIG. 5G, the rows of data in the table 505 are divided into three sub-tables: a first sub-table (i.e., Sub-table I 571) includes the rows of data with color "blue", a second sub-table (i.e., Sub-table II 572) includes the rows of data with color "green", and a third sub-table (i.e., Sub-table III 573) includes the rows of data with color "red".

In some implementations, a numerical value for each category feature can then be calculated based on the above equation (2). With reference to FIG. 5G, taking the first row of data in the sub-table I 571 as an example, the first summation equals to the quantity of categories that are same as the determined current category (i.e., "blue") and have a positive value of label (i.e., "1") in all the previous rows of the current row, and the second summation is determined based on category features that are same as the determined current category in all the previous rows of the current row. Therefore, for the first row of data in the Sub-table I 571, the first summation (*Enc*[*label_positive_sum*]) equals to 0, and the second summation (*Enc*[*cate_cout*]) equals to 0. In this case, the numerical value for "blue" in the first row is calculated as: $Enc \left[encoding_res\right] = \frac{0 + 1 ∗ 0.5}{0 + 1} = 0.5$

Thus, the categorical feature "blue" in the first row of the Sub-table I 571 is transformed to the numerical value of 0.5.

Take the second row of the Sub-table I 571 as another example, the first summation *(Enc*[*label_positive_sum*]) equals to 1, and the second summation (*Enc*[*cate_cout*]) equals to 1. In this case, the numerical value for "blue" in the second row is calculated as: $Enc \left[encoding_res\right] = \frac{1 + 1 ∗ 0.5}{1 + 1} = 0.75 .$

That is, in this example, the categorical feature "blue" in the second row of the Sub-table I 571 is transformed to the numerical value of 0.75.

For another example, for the third row of the Sub-table I 571, the first summation (*Enc*[*label_positive_sum*]) equals to 1, and the second summation (*Enc*[*cate_cout*]) equals to 2. In this case, the numerical value for "blue" in the third row is calculated as: $Enc \left[encoding_res\right] = \frac{1 + 1 ∗ 0.5}{2 + 1} = 0.5$

That is, in this example, the categorical feature "blue" in the third row of the Sub-table I 571 is transformed to the numerical value of 0.5.

In some implementations, the first party *P₁* and the second party *P₂* can share data using secret sharing techniques, and thus the data in the combined table are encrypted data (e.g., in the form of secret shares) instead of plaintext data as currently shown in the example combined table 505 of FIG. 5E. In this case, in the subsequent steps for calculating the numerical values for the categorical features that are performed based on the combined table, the data being processed is also in the form of encrypted data. For example, the data in such as the shuffle combined table 506 of FIG. 5F and the sub-tables 571-573 of FIG. 5G are also in the form of encrypted data.

Moreover, since both the first summation and the second summation are performed based on the rows of data having categorical features classified in the same category (for example, with the same color), it may be easier to calculate the summations by performing summation operations along rows of the sub-tables. In other words, the techniques of the present disclosure can facilitate the calculation process, reduce the computational complexity, and improve computational efficiency by generating the combined table and performing summations along the rows of the combined table.

In some implementations, after calculating the numerical values for each of the first categorical features and the second categorical features in the combined table, the first party can replace each of the first categorical features and the second categorical features with the numerical values. Thereby all the categorical features are transformed to the numerical data.

FIG. 5H shows an example table 508 that all categorical features are replaced by the corresponding numerical data. In some implementations, with reference to FIG. 5H, the categorical features in the column "Feature" (i.e., the Feature column 561 in table 506) correspond to the categorical features and are replaced by the numerical values calculated based on the three sub-tables, sub-table I 571, sub-table II 572, and sub-table III 573.

In some implementations, after model training based on the numerical values of the categorical features, in the prediction phase, numerical values for categorical features may also be calculated in a similar manner. For example, the numerical values (denoted as *value*) for each of the first categorical features and the second categorical features included in the training dataset for prediction can be calculated based on the following equation (3):
$value = \frac{cate _ positive _ label _ sum + ap}{cate _ cout _ sum + a}$ wherein, *a* is a parameter with a value of 1, and *p* is a parameter with a value of 0.5, or any other values consistent with values used in the training phrase. In some implementations, *cate_positive_label_sum* represents the quantity of categories that are same as the determined current category and have a positive value of label in the combined table; and *cate_cout_sum* represents the quantity of categories that are same as the determined current category. Take the table 506 shown in FIG. 5F as an example. For the categorical features "blue", the table 506 includes three "blue" and two of them have a positive label value of "1". In this case, the numerical value for blue to be included in the training dataset for prediction is calculated as:
$value = \frac{2 + 1 ∗ 0.5}{3 + 1} = 0.625$

In this case, all categorical features "blue" in the training dataset for prediction can be transformed to "0.625". Similarly, for the categorical features "red", the table 506 includes only one "red" having a label value of "0". In this case, the numerical value for red to be included in the training dataset for prediction is calculated as: $value = \frac{0 + 1 ∗ 0.5}{1 + 1} = 0.25$

In this case, all categorical features "red" in the training dataset for prediction can be transformed to "0.25". Thus, the disclosed techniques also provide an effective and efficient method to calculate numerical values for categorical features included in a training dataset for prediction.

In some other implementations, in the example process 400, the first table generated at 402 may be sent, by the first party, to the second party based on the secret sharing technique, so as to perform the numerical transformation of categorical features by the second party. For example, the first party *P₁* may send the first table (e.g., the first table 503 shown in FIG. 5C) to the second party *P₂* based on the secret sharing technique. In response to receiving the first table, the second party *P₂* combines, e.g., in its MPC engine, the received first table and the generated second table (e.g., the second table 504 shown in FIG. 5C) to a combined table, so as to further calculate numerical values for each of the first categorical features and the second categorical features in the combined table. In some implementations, the combined table obtained by the second party *P₂* is different from the combined table obtained by the first party *P₁,* for example, in the aspect of the combined order of the first categorical features and the second categorical features.

By utilizing one-hot mapping and secret sharing, as well as referring to the principle of targeting encoding, the techniques of the present disclosure can ensure the computation process is secure and no information leakage, and yield correct results for the numerical transformation of categorical features. In addition, such a method of transforming categorical features to numerical data may provide improved modeling performance in training phases of machine learning, ultimately leading to robust predictive modeling.

FIG. 6 is an example computer or computer-implemented system 600. The system 600 can be used for the operations described in association with the implementations described herein, for example, as a data processing apparatus or server of a party participating in a multiparty computation (MPC) instance. For example, the system 600 may be included in computing devices of the one or more online components and/or the one or more offline components. The system 600 includes a processor 610, a memory 620, a storage device 630, and an input/output device 640. The components 610, 620, 630, and 640 are interconnected using a system bus 650. The processor 610 is capable of processing instructions for execution within the system 600. In some implementations, the processor 610 is a single-threaded processor. The processor 610 is a multi-threaded processor. The processor 610 is capable of processing instructions stored in the memory 620 or on the storage device 630 to display graphical information for a user interface on the input/output device 640.

The memory 620 stores information within the system 600. In some implementations, the memory 620 is a computer-readable medium. The memory 620 can be a volatile memory unit or a non-volatile memory unit. The storage device 630 is capable of providing mass storage for the system 600. The storage device 630 is a computer-readable medium. The storage device 630 may be a floppy disk device, a hard disk device, an optical disk device, or a tape device. The input/output device 640 provides input/output operations for the system 600. The input/output device 640 includes a keyboard and/or pointing device. The input/output device 640 includes a display unit for displaying graphical user interfaces.

In this specification the term "engine" will be used broadly to refer to a software based system or subsystem that can perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any disclosure or on the scope of what may be claimed, but rather as descriptions of features that may be specific to particular embodiments of particular disclosures. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method for transforming categorical features to numerical data, comprising:
generating (402), by a first party participating in a secure multi-party computation, MPC, a first table based on a set of data having first categorical features in a first order, wherein the first table comprises one or more columns indicating labels of the first categorical features in the first order, and one or more columns indicating counts of the first categorical features in the first order;
receiving (404), from a second party participating in the secure MPC, a second table based on a secret sharing technique, wherein the second table comprises one or more columns indicating labels of a second categorical features in a second order, and one or more columns indicating counts of the second categorical features in the second order;
combining (406), by the first party, the first table and the second table to a combined table comprising the first categorical features and the second categorical features in a combined order, wherein the combined table comprises one or more columns indicating labels of the first categorical features and the second categorical features in the combined order, and one or more columns indicating counts of the first categorical features and the second categorical features in the combined order; and
calculating (408) numerical values for each of the first categorical features and the second categorical features by utilizing the combined table.

2. The method of claim 1, wherein generating the first table based on the set of data having first categorical features in the first order comprises:
generating a first random seed and a second random seed; and
encrypting data of the one or more columns indicating the labels of the first categorical features using the first random seed, and encrypting data of the one or more columns indicating the counts of the first categorical features using the second random seed.

3. The method of claim 2, wherein a value of the first random seed is different from a value of the second random seed.

4. The method of claim 1, wherein generating the first table based on the set of data having first categorical features in the first order comprises:
determining a quantity of columns indicating the labels of the first categorical features and a quantity of columns indicating the counts of the first categorical features based on number of different categories included in the first categorical features,
wherein each column of the one or more columns indicating the labels of the first categorical features corresponds to one of the different categories of the first categorical features, and each column of the one or more columns indicating the counts of the first categorical features corresponds to one of the different categories of the first categorical features.

5. The method of claim 1, wherein the set of data having first categorical features in the first order comprises feature data indicating the first categorical features, and label data indicating labels corresponding to the first categorical features, and wherein generating the first table based on the set of data having first categorical features in the first order comprises:
determining values of data in the one or more columns indicating the labels of the first categorical features in the first order based on the label data; and
determining values of data in the one or more columns indicating the counts of the first categorical features in the first order based on the feature data.

6. The method of any of claims 1 to 5, wherein calculating numerical values for each of the first categorical features and the second categorical features by utilizing the combined table comprises:
according to the combined order of the first categorical features and the second categorical features, performing summation operations along rows of the combined table to calculate the numerical values for each of the first categorical features and the second categorical features.

7. The method of claim 6, wherein performing summation operations along rows of the combined table to calculate the numerical values for each of the first categorical features and the second categorical features comprises:
for a current row in the combined table:
determining a current category corresponding to the current row;
calculating a first summation and a second summation based on all previous rows of the current row, wherein the first summation indicates a quantity of categories that are same as the current category and have a positive value of label in the all previous rows of the current row, the second summation indicates a quantity of categories that are same as the current category in the all previous rows of the current row; and
calculating numerical value corresponding to the current category based on the first summation and the second summation.

8. The method of any of claims 1 to 7, wherein the method further comprises:
shuffling, by the first party, raw data having the first categorical features in a first original order to the set of data having the first categorical features in the first order.

9. The method of any of claims 1 to 8, wherein the method further comprises:
identifying a third random seed; and
wherein combining the first table and the second table to a combined table comprising the first categorical features and the second categorical features in a combined order comprises:
combining the first categorical features and the second categorical features in the combined order according to the third random seed.

10. The method of any of claims 1 to 9, wherein the method further comprises:
sending, by the first party, the first table to the second party based on a secret sharing technique.

11. One or more non-transitory computer-readable storage media storing one or more instructions that, when executable by one or more computers, cause the one or more computers to perform the method of any of claims 1 to 10.

12. A computer-implemented system, comprising:
one or more computers; and
one or more computer memory devices interoperably coupled with the one or more computers and having non-transitory computer-readable storage media storing one or more instructions that, when executed by the one or more computers, perform the method of any of claims 1 to 10.
